# EUROPÄISCHE PATENTANMELDUNG

(11) **EP 4 160 935 A1**
(43) Veröffentlichungstag der Anmeldung: **05.04.2023**
(21) Anmeldenummer: 21200064.0
(22) Anmeldetag: 30.09.2021
(51) Int. Cl.: H04B 7/155, H04B 7/145

(54) **KOMMUNIKATIONSSYSTEM UND VERFAHREN ZUM BETRIEB EINES KOMMUNIKATIONSSYSTEMS**

(71) Anmelder: Siemens AG Österreich, 1210 Wien (AT)
(72) Erfinder: Die Erfindernennung liegt noch nicht vor
(74) Vertreter: Siemens Patent Attorneys

(57) **Zusammenfassung**

Verfahren zum Betrieb eines Kommunikationssystems (S), welches zumindest einen Sender (TRX1, TRX2), zumindest einen Empfänger (TRX3, TRX4) und zumindest einen steuerbaren Reflektor (RIS1, RIS2) mit einem Steuer-Modul (CM1, CM2) umfasst, und ein Sende-Signal (S1a, S1b, S2a, S2b) von dem zumindest einen Sender (TRX1, TRX2) gesendet wird und mithilfe des zumindest einen steuerbaren Reflektors (RIS1, RIS2) ein reflektiertes Signal (S3a, S3b, S4a, S4b) zu dem zumindest einen Empfänger (TRX3, TRX4) gebildet und dort als empfangenes Signal empfangen wird, wobei zumindest eine Reflexionseigenschaft des zumindest einen steuerbaren Reflektors (RIS1, RIS2) mithilfe des Steuer-Signals (CS1, CS2) von dem Steuer-Modul (CM1, CM2) beeinflusst wird, und anhand einer Information über das Steuer-Signal (CS1, CS2) und dem empfangenen Signal (S3a, S3b, S4a, S4b) von dem zumindest einen Empfänger (TRX3, TRX4) festgestellt wird, ob dieses über den zumindest einen steuerbaren Reflektor (RIS1, RIS2) reflektiert und empfangen wurde.

## Beschreibung

Die Erfindung betrifft ein Verfahren zum Betrieb eines Kommunikationssystems, welches zumindest einen Sender, zumindest einen Empfänger und zumindest einen steuerbaren Reflektor mit einem Steuer-Modul umfasst, und ein Sende-Signal von dem zumindest einen Sender gesendet wird und mithilfe des zumindest einen steuerbaren Reflektors ein reflektiertes Signal zu dem zumindest einen Empfänger gebildet und dort als empfangenes Signal empfangen wird.

Die Erfindung betrifft ein Kommunikationssystem, umfassend zumindest einen Sender, zumindest einen Empfänger und zumindest einen steuerbaren Reflektor mit einem Steuer-Modul, wobei das System dazu eingerichtet ist, ein Sende-Signal von dem zumindest einen Sender zu senden und mithilfe des zumindest einen steuerbaren Reflektors ein reflektiertes Signal zu dem zumindest einen Empfänger zu bilden und dort als empfangenes Signal zu empfangen,

Durch Verwendung eines steuerbaren Reflektors (engl. "reflective intelligent surface", kurz "RIS") kann eine Kommunikation zwischen einem Sender und einem Empfänger auch bei einer abgedeckten, das heißt abgeschatteten Verbindung (engl. "non-line of sight") sichergestellt werden.

Die Verfügbarkeit einer solchen Verbindung kann weiter abgesichert werden, wenn in einer Kommunikationsumgebung, wie in einer Industriehalle, zu jedem Arbeitsbereich ein eigener steuerbaren Reflektor vorgesehen wird.

Die Verbindung kann dazu zwischen dem Empfänger in einem Arbeitsbereich, wie ein bewegtes Endgerät, und dem Sender, wie eine Basisstation, über mehrere steuerbare Reflektoren aufgebaut werden, um beispielsweise unterschiedliche Bereiche im Raum abzudecken.

Dabei entsteht jedoch ein unerwünschter Effekt, nämlich dass der Empfänger nicht feststellen kann, mit welchem steuerbaren Reflektor die Funk-Verbindung erfolgt. Dadurch ist es schwierig eine Optimierung des Signalwegs durchzuführen.

Im Stand der Technik ist es bekannt, eine Zuordnung über Positionsdaten zwischen einem steuerbaren Reflektor und einem Empfänger durchzuführen, wobei die Positionsdaten beispielsweise über Lokalisierungsempfänger bestimmt werden und für die weitere Verwendung bereitgestellt werden.

Steuerbare Reflektoren sind häufig ortsfest montiert und daher ist ein Lokalisierungssystem für diese steuerbaren Reflektoren nicht unbedingt erforderlich, wie bei beweglichen Empfängern. Daher ist es für eine solche Anwendung ausreichend, wenn Positionsdaten für einen steuerbaren Reflektor nur einmal ermittelt werden.

Bekannt ist eine Lokalisierung beispielsweise mithilfe einer UWB- (engl. "ultra wide band"), Bluetooth Low Energy- oder RFID-Ortung.

Das Problem dabei besteht jedoch darin, dass all diese Technologien beispielweise zusätzlich im steuerbaren Reflektor und im Empfänger implementiert werden müssen.

Alternativ könnte eine Anzahl von UWB-Sendern zur Lokalisierung eingesetzt werden, indem unter Verwendung von Abschattungs-Informationen dieser UWB-Sender eine Lokalisierung durchgeführt wird. Obwohl ein derartiges System preisgünstig sein kann, würde ein derartiges System jedoch nicht über eine Fähigkeit zur Kommunikation verfügen.

Diese Zusatzfunktion erhöht daher die Komplexität des Systems und die Kosten, beispielsweise indem durch die genannten Technologien im steuerbaren Reflektor und im Empfänger entsprechende Schnittstellen in der zugrunde liegenden Software vorgesehen werden müssen, um die Lokalisierungsinformation zur Verfügung stellen zu können

Es ist Aufgabe der Erfindung ein Verfahren und ein System bereitzustellen, bei welchem der Signalübertragungsweg einfacher nachvollzogen werden kann.

Die erfindungsgemäße Aufgabe wird durch ein Verfahren eingangs genannter Art gelöst, wobei zumindest eine Reflexionseigenschaft des zumindest einen steuerbaren Reflektors mithilfe des Steuer-Signals von dem Steuer-Modul beeinflusst wird, und anhand einer Information über das Steuer-Signal und dem empfangenen Signal von dem zumindest einen Empfänger festgestellt wird, ob dieses über den zumindest einen steuerbaren Reflektor reflektiert und empfangen wurde.

Mithilfe der Erfindung ist es möglich, die Empfangsrichtung auf einfache Weise bestimmen lässt, was in weiterer Folge dazu genutzt werden kann, einen optimalen Signalweg und einen optimalen Bereich für einen Signalempfang zu ermitteln beziehungsweise einzustellen.

Eine Analyse der Kommunikation zwischen Sender und Empfänger mit Hilfe eines steuerbaren Reflektors zeigt, dass die Empfangspegel durch optimale Phasenstellung der Reflexionen am steuerbaren Reflektor maximiert werden können.

Es kann ferner gezeigt werden, dass durch geeignetes Verändern aller Phasenlagen der einzelnen Antennen-Elemente des steuerbaren Reflektors die Feldstärke, also sich die Amplitude am Empfänger nicht ändert, sondern nur die RF- Trägerphase verändert wird.

Im einfachsten Fall kann das durch eine Inversion der Phasenlage erzielt werden, welche dann auch zu einer Inversion der Phase des empfangenen Signals führt.

Diese Phaseninversion oder Phasenänderung kann für weitere Funktionalitäten verwendet werden.

Ein zu einem Arbeitsbereich zugeordneter steuerbarer Reflektor kann einer bestimmten Code-Sequenz zugeordnet werden, wie beispielweise ein Gold-Code, eine Kasami- Sequenz, ein Barker-Code, ein Willard-Code usw.

In einer Weiterbildung der Erfindung ist es vorgesehen, dass das Steuer-Signal einen Code-Wert und/oder einen Daten-Wert umfasst.

Mit anderen Worten können die Phasen einzelner Antennen-Elemente des Antennen-Arrays mit einer Daten-Sequenz moduliert werden, zusätzlich zu einer reinen Code-Sequenz.

Zwischen Kommunikationspaketen können die Phasen der einzelnen Reflektor-Elemente entsprechend der Code- und/oder Daten-sequenz invertiert werden, wobei die Invertierung eine Invertierung der RF- Trägerphase im Empfänger verursacht, welche gemessen beziehungsweise erkannt werden kann.

In einer Weiterbildung der Erfindung kann die Phase auch während einer Kommunikation über die Funk-Module TRX-TRX3 invertiert werden.

Dies ist insbesondere dann möglich, wenn diese Inversion das verwendete Übertragungsverfahren nicht maßgeblich beeinflusst.

Dadurch wird erreicht, dass die Erkennung des entsprechenden Reflektors, welcher den Signalpfad zwischen dem Sender und dem entsprechenden Empfänger eines Signals erzeugt, unabhängig vom Status der Kommunikation erfolgen kann.

In einer Weiterbildung der Erfindung ist es vorgesehen, dass der Daten-Wert zumindest eine Positionsinformation des zumindest einen steuerbaren Reflektors beinhaltet.

Der Empfänger kann also durch Messung der Trägerphase die Code-Sequenz detektieren. Diese ermöglicht die Realisierung einer zusätzlichen Informationsübermittlung vom steuerbaren Reflektor hin zum Empfänger, die der normalen Datenkommunikation überlagert ist.

Mit dieser Information kann der Empfänger beispielweise jeden steuerbaren Reflektor eindeutig identifizieren.

Ferner kann der Empfangswinkel (engl. "direction of arrival", kurz "DoA" des Signals und damit die räumliche Position des Empfängers bestimmt werden, indem die Daten-Sequenz die Winkelstellung des steuerbaren Reflektors und die Projektierungsinformation des Arbeitsbereiches beinhaltet.

Der Empfangswinkel DoA muss nicht zwangsläufig beim Empfänger bestimmt werden.

Der eingestellte Abstrahlwinkel des steuerbaren Reflektors kann dem Empfänger bekannt gemacht werden, beispielsweise durch Bereitstellung von Konfigurationsdaten.

Beispielsweise kann über eine bekannte Höhe, wie bei einer festen Montage eines Funk-Moduls in einem Fahrzeug, eine exakte Position bestimmt werden.

In der anderen Richtung kann bei bekannter Position der jeweilige steuerbare Reflektor beispielsweise elektronisch nachgestellt werden, um die Kommunikation bei einer Bewegung des Funk-Moduls auf einem Fahrzeug aufrecht zu erhalten.

Außerdem können Signalanteile von unterschiedlichen steuerbaren Reflektoren voneinander unterschieden werden, ohne dass ein zusätzlicher Aufwand in der Hardware des Systems notwendig ist, wodurch Kosten- und Komplexitätsvorteile entstehen.

Wenn die räumliche Position des steuerbaren Reflektors und die Information über eine Winkelstellung übertragen wird, kann die Position des Empfängers auf einfache Weise errechnen.

Außerdem ist es auf einfache Weise möglich Daten vom steuerbaren Reflektor zum Empfänger zu übertragen, ohne in die Kommunikation beziehungsweise deren Daten einzugreifen.

In einer Weiterbildung der Erfindung ist es vorgesehen, dass das Steuer-Signal Puls-Code-moduliert ist.

Dadurch ist eine zeitlich variable Codierung möglich.

Dies ist vorteilhaft, da nicht kontinuierlich eine Codierung übertragen werden muss, was die Datenübertragungskapazität unerwünscht beeinflussen kann, indem die Kapazität sinkt.

Wird die Codierung beispielweise periodisch, aber nur über einen kleinen Zeitraum - bemessen an der Übertragungsdauer - durchgeführt, so kann eine optimale Datenübertragung bei gleichzeitig durchführbarer Analyse der ReflexionsEigenschaften durchgeführt werden.

Die erfindungsgemäße Aufgabe wird auch durch ein Kommunikationssystem eingangs genannter Art gelöst, wobei das Steuer-Modul dazu eingerichtet ist, zumindest eine Reflexionseigenschaft des zumindest einen steuerbaren Reflektors mithilfe des Steuer-Signals zu beeinflussen, und der zumindest eine Empfänger dazu eingerichtet ist anhand einer Information über das Steuer-Signal und dem empfangenen Signal festzustellen, ob dieses über den zumindest einen steuerbaren Reflektor reflektiert und empfangen wurde.

In einer Weiterbildung der Erfindung ist es vorgesehen, dass der zumindest eine steuerbare Reflektor ein binär steuerbar planares Antennen-Array ist.

Dadurch kann das System einfach und kostengünstig realisiert werden.

Dies ist insbesondere durch eine einfache Steuer-Vorrichtung möglich, welche nur zwei Modulationszustände erzeugen muss. Die Erfindung wird nachfolgend anhand eines in der beigeschlossenen Zeichnung dargestellten Ausführungsbeispiels näher erläutert.

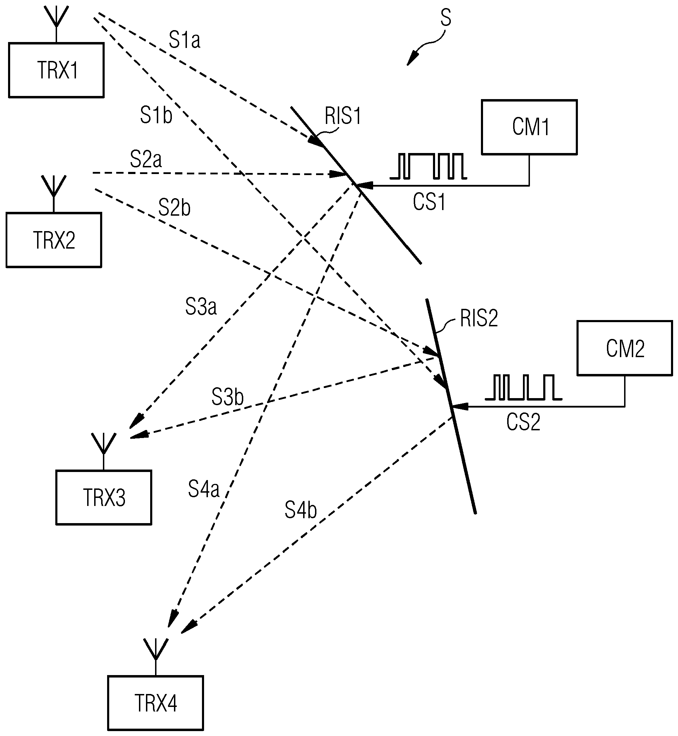

Die Zeichnung zeigt ein Ausführungsbeispiel der Erfindung, in welchem eine Funkkommunikation mithilfe eines steuerbaren Reflektors dargestellt ist.

Ein Kommunikationssystem S umfasst in diesem Beispiel einen ersten Sender TRX1 und einen zweiten Sender TRX2, einen ersten Empfänger TRX3 und einen zweiten Empfänger TRX4, sowie einen steuerbaren ersten Reflektor RIS1 mit einem Steuer-Modul CM1 und einen steuerbaren zweiten Reflektor RIS2 mit einem Steuer-Modul CM2.

Sender beziehungsweise Empfänger können jeweils durch eine Antennencharakteristik beschrieben werden.

Der erste Sender TRX1 strahlt gemäß einer vorliegenden Sender-Antennencharakteristik ein erstes Sende-Signal ab, welches sich als Teil-A-Sende-Signal S1a in Richtung des steuerbaren ersten Reflektors RIS1 ausbreitet.

Das erste Sende-Signal des ersten Sender TRX1 wird ferner als Teil-B-Sende-Signal S1b abgestrahlt, welches sich in Richtung des steuerbaren zweiten Reflektors RIS2 ausbreitet.

Der zweite Sender TRX2 strahlt gemäß einer vorliegenden Sender-Antennencharakteristik ein zweites Sende-Signal ab, welches sich als Teil-A-Sende-Signal S2a in Richtung des steuerbaren ersten Reflektors RIS2 ausbreitet.

Das zweite Sende-Signal TRX2 des ersten Sender TRX1 wird ferner als Teil-B-Sende-Signal S2b abgestrahlt, welches sich in Richtung des steuerbaren zweiten Reflektors RIS2 ausbreitet.

Die Teil-Sende-Signale S1a und S1b sowie S2a und S2b können auch Anteile eines Sendesignals sein, welche durch geeignete Formung der Richtcharakteristik in Richtung der Sender TRX1 bzw. TRX2 geschickt werden.

Der steuerbare erste Reflektor RIS1 reflektiert das Teil-A-Sende-Signal S1a des ersten Senders TRX1 in Form eines reflektierten ersten Teil-A-Sende-Signals S3a in Richtung des ersten Empfängers TRX3.

Der steuerbare zweite Reflektor RIS2 reflektiert das Teil-B-Sende-Signal S1b des ersten Senders TRX2 in Form des reflektierten ersten Teil-B-Sende-Signals S3b in Richtung des ersten Empfängers TRX3.

Der steuerbare erste Reflektor RIS1 reflektiert das Teil-A-Sende-Signal S2a des zweiten Senders TRX2 in Form des reflektierten zweiten Teil-A-Sende-Signals S4a in Richtung des zweiten Empfängers TRX4.

Der steuerbare zweite Reflektor RIS2 reflektiert das Teil-B-Sende-Signal S2b des zweiten Senders TRX2 in Form des reflektierten zweiten Teil-B-Sende-Signals S4b in Richtung des zweiten Empfängers TRX4.

Das Steuer-Module CM1, CM2 können zumindest eine Reflexionseigenschaft des jeweiligen steuerbaren Reflektors RIS1, RIS2 mithilfe des Steuer-Signals CS1, CS2 beeinflussen.

Beispielweise kann der steuerbare Reflektor RIS1, RIS2 ein binär steuerbares planares Antennen-Array sein, bei welchem die Phase des Reflexions-Faktors beeinflusst werden kann, indem eine an ein Antennen-Element des Arrays verbundene Diode binär angesteuert wird. Jedes Antennen-Element verfügt klarerweise über eine eigene Diode. Anstelle einer Diode kann auch ein Transistor, ein Schalter oder ein Phasenschieber eingesetzt werden.

Das Antennen-Array kann durch eine entsprechende Antennencharakteristik beschrieben werden, welches die Reflektor-Array-Anordnung mit Antennen-Elementen und deren Ansteuerung beschreibt.

Somit können der erste Empfänger TRX3 und der zweite Empfänger TRX4 jeweils anhand einer Information über das Steuer-Signal CS1 für den steuerbaren ersten Reflektor RIS1 beziehungsweise über das Steuer-Signal CS2 für den steuerbaren zweiten Reflektor RIS2 und dem jeweils reflektierten beziehungsweise empfangenen Signal S3a, S3b beziehungsweise S4a, S4b feststellen, über welchen der steuerbaren Reflektoren RIS1, RIS2 das jeweilige Signal reflektiert und vom jeweiligen Empfänger TRX3, TRX4 empfangen wurde, nämlich anhand der Codierung des jeweiligen Steuer-Signals CS1, CS2.

Dazu weisen die Empfänger TRX3, TRX4 eine dementsprechende Auswertevorrichtung mit einem Speicher auf.

Das Steuer-Signal CS1, CS2 kann einen starren, zeitlich konstanten Code oder alternativ einen zeitlich variablen Code umfassen.

Der Code wird dem Empfänger zur Verfügung gestellt, beispielsweise durch eine einmalige Übertragung der relevanten Code-Informationen bei Verwendung eines starren Codes, oder durch eine direkte Kommunikationsverbindung zwischen Modulationssystem und Empfänger bei Verwendung eines zeitlich variablen Codes.

Die Funk-Übertragung zwischen den jeweiligen Funk-Vorrichtungen TRX1-TRX4 kann auch bidirektional sein. Das Ausführungsbeispiel mit einer unidirektionalen Funk-Übertragung dient einer vereinfachten Darstellung.

Das Steuer-Signal CS1, CS2 kann jeweils neben dem Code-Wert auch einen Daten-Wert umfassen.

Der jeweilige Daten-Wert kann Positionsinformationen der steuerbaren Reflektoren RIS1, RIS2 beinhalten, um beispielsweise auf eine, von der Datenübertragung zwischen dem Sender TRX1 und dem Empfänger TRX3 unabhängige Weise Angaben zum jeweiligen Ort der steuerbaren Reflektoren RIS1, RIS2 zu übermitteln, welche zur Bestimmung des Orts des Empfängers TRX3 verwendet werden können.

### Bezugszeichenliste:

- CM1, CM2: Steuer-Modul
- CS1, CS2: Steuer-Signal
- RIS1, RIS2: steuerbarer Reflektor
- S: Kommunikationssystem
- S1a, S1b, S2a, S2b: gesendetes Funk-Signal
- S3a, S3b, S4a, S4b: reflektiertes/ empfangenes Funk-Signal
- TRX1-TRX4: Sender/ Empfänger

## Patentansprüche

1. Verfahren zum Betrieb eines Kommunikationssystems (S), welches zumindest einen Sender (TRX1, TRX2), zumindest einen Empfänger (TRX3, TRX4) und zumindest einen steuerbaren Reflektor (RIS1, RIS2) mit einem Steuer-Modul (CM1, CM2) umfasst, und ein Sende-Signal (S1a, S1b, S2a, S2b) von dem zumindest einen Sender (TRX1, TRX2) gesendet wird und mithilfe des zumindest einen steuerbaren Reflektors (RIS1, RIS2) ein reflektiertes Signal (S3a, S3b, S4a, S4b) zu dem zumindest einen Empfänger (TRX3, TRX4) gebildet und dort als empfangenes Signal empfangen wird,
**dadurch gekennzeichnet, dass** zumindest eine Reflexionseigenschaft des zumindest einen steuerbaren Reflektors (RIS1, RIS2) mithilfe des Steuer-Signals (CS1, CS2) von dem Steuer-Modul (CM1, CM2) beeinflusst wird,
und anhand einer Information über das Steuer-Signal (CS1, CS2) und dem empfangenen Signal (S3a, S3b, S4a, S4b) von dem zumindest einen Empfänger (TRX3, TRX4) festgestellt wird, ob dieses über den zumindest einen steuerbaren Reflektor (RIS1, RIS2) reflektiert und empfangen wurde.

2. Verfahren nach dem vorhergehenden Anspruch, wobei das Steuer-Signal (CS1, CS2) einen Code-Wert und/oder einen Daten-Wert umfasst.

3. Verfahren nach dem vorhergehenden Anspruch, wobei der Daten-Wert zumindest eine Positionsinformation des zumindest einen steuerbaren Reflektors (RIS1, RIS2) beinhaltet.

4. Verfahren nach einem der vorhergehenden Ansprüche, wobei das Steuer-Signal (CS1, CS2) Puls-Code-moduliert ist.

5. Kommunikationssystem (S), umfassend zumindest einen Sender (TRX1, TRX2), zumindest einen Empfänger (TRX3, TRX4) und zumindest einen steuerbaren Reflektor (RIS1, RIS2) mit einem Steuer-Modul (CM1, CM2), wobei das System dazu eingerichtet ist, ein Sende-Signal (S1a, S1b, S2a, S2b) von dem zumindest einen Sender (TRX1, TRX2) zu senden und mithilfe des zumindest einen steuerbaren Reflektors (RIS1, RIS2) ein reflektiertes Signal (S3a, S3b, S4a, S4b) zu dem zumindest einen Empfänger (TRX3, TRX4) zu bilden und dort zu empfangen, **dadurch gekennzeichnet, dass** das Steuer-Modul (CM1, CM2) dazu eingerichtet ist, zumindest eine Reflexionseigenschaft des zumindest einen steuerbaren Reflektors (RIS1, RIS2) mithilfe des Steuer-Signals (CS1, CS2) zu beeinflussen, und der zumindest eine Empfänger (TRX3, TRX4) dazu eingerichtet ist anhand einer Information über das Steuer-Signal (CS1, CS2) und dem reflektierten Signal (S3a, S3b, S4a, S4b) festzustellen, ob dieses über den zumindest einen steuerbaren Reflektor (RIS1, RIS2) reflektiert und als empfangenes Signal empfangen wurde.

6. System nach dem vorhergehenden Anspruch, wobei der zumindest eine steuerbare Reflektor (RIS1, RIS2) ein binär steuerbar planares Antennen-Array ist.
